# EUROPEAN PATENT SPECIFICATION

(11) **EP 2 315 985 B1**
(45) Date of publication and mention of the grant of the patent: **14.11.2018**
(21) Application number: 08782369.6
(22) Date of filing: 25.07.2008
(51) Int. Cl.: F25B 1/00, B60H 1/32, F25B 49/02

(54) **CONTINUOUS COMPRESSOR ENVELOPE PROTECTION IN A REFRIGERATION SYSTEM**
KONTINUIERLICHER KOMPRESSORBETRIEBSBEREICHSCHUTZ IN EINER KÄLTEANLAGE
PROTECTION D'ENVELOPPE DE COMPRESSEUR CONTINUE DANS UN SYSTÈME DE RÉFRIGÉRATION

(43) Date of publication of application: 04.05.2011
(73) Proprietor: Carrier Corporation, Farmington, CT 06034 (US)
(72) Inventor: DONNAT, Gilles, 69004 Lyon (FR); VARIGONDA, Subbarao, Manchester CT 06042 (US); MIJANOVIC, Stevo, South Windsor CT 06074 (US)
(74) Representative: Dehns
(86) International application number: PCT/US2008/071133
(87) International publication number: WO 2010/011226

(56) References cited:
- EP-A2- 1 039 252
- JP-A- H1 019 396
- US-A1- 2003 000 236
- US-A1- 2007 089 440
- US-A1- 2007 089 440
- US-B2- 6 622 505

## Description

### Technical Field

This invention relates generally to transport refrigeration systems and, more particularly, to control of a compressor motor drive in a vapor compression system therefor.

### Background of the Invention

Transport refrigeration systems are commonly used in refrigerated trucks, truck trailers and containers in order to preserve perishable cargo during transport from one location to another. Such a system includes the necessary components for a vapor compression cycle, including a compressor which necessarily includes some type of drive means. For containers and truck trailers, this function has generally been provided by a dedicated internal combustion engine with its speed being selectively varied in order to maintain a desired compressor envelope. In refrigerated trucks and vans, however, the compressor has generally been located within the main engine drive compartment, with the compressor then being driven by direct connection to the main engine drive. Conduits then serve to provide the closed circuit refrigerant flow to the condenser and evaporator units of the system.

With such a so-called direct drive arrangement, the speed of the compressor is dependent on the speed of the main engine drive. Thus, when the truck is proceeding at higher speeds down the highway, the compressor is driven at a high speed so as to obtain a high discharge pressure. However, when the engine is idling, for example, then the compressor will be driven at a relatively slow speed, and the discharge pressure and temperature will be relatively low. In order to protect the compressor envelope, it is therefore necessary to employ the selective use of switches in order to vary the speed of the variable speed condenser and evaporator fans or to modulate valves or stop the unit.

### Disclosure of the Invention

According to a first aspect of the present invention, there is provided a transport refrigeration system having a generator driven by an engine and a compressor of a closed loop vapor compression system supplied with the generated electrical power, the transport refrigeration system comprising a box to be refrigerated by said vapor compression system, and a control apparatus, the control apparatus comprising: a first temperature sensor configured to sense the discharge temperature of the compressor and generate a first temperature signal representative thereof;
a second temperature sensor configured to sense the temperature of air being returned from said box and to generate a return air temperature signal representative thereof;
a first pressure sensor configured to sense the suction pressure of the compressor and to generate a suction pressure signal representative thereof;
a second pressure sensor configured to sense the discharge pressure of the compressor and to generate a discharge pressure signal representative thereof;
a microprocessor configured to receive said first temperature signal, said return air temperature signal, said suction pressure signal and said discharge pressure signal and to generate an inverter control signal in response thereto; and
an inverter configured to receive said inverter control signal from said microprocessor and to receive electrical power from the generator and to provide a level of electrical power to the compressor in response to said inverter control signal.

According to a second aspect of the present invention, there is provided a method of controlling a transport refrigeration system having a generator driven by an engine with the generated electrical power being supplied to a compressor of a closed loop compression system and a box being refrigerated by said vapor compression system, comprising the steps of: sensing the discharge temperature of the compressor and generating a first temperature signal representative thereof; sensing the temperature of air being returned from said box and generating a return air temperature signal responsive thereto; sensing the suction pressure of the compressor and creating a suction pressure signal representative thereof; sensing the discharge pressure of the compressor and generating a discharge pressure signal representative thereof; sending said first temperature signal, said return air temperature signal, said suction pressure signal, and said discharge pressure signal to a microprocessor and generating an inverter control signal in response thereto; and sending said inverter control signal to an inverter for responsively providing the desired electrical voltage and frequency to the compressor. JP H10 19396 A discloses an air conditioning system having a control apparatus, the control apparatus comprising a temperature sensor configured to sense the discharge temperature of the compressor and generating a temperature signal representative thereof; a first pressure sensor configured to sense the suction pressure of the compressor to generate a suction pressure signal representative thereof; a second pressure sensor configured to sense the discharge pressure of the compressor to generate a discharge pressure signal signal representative thereof; a microprocessor configured to receive said temperature signal, said suction pressure, and said discharge pressure signal and to generate an inverter control signal in response thereto; and an inverter configured to receive said inverter control signal from said microprocessor and to receive electrical power from the generator and to provide a level of electrical power to the compressor in response to said inverter control signal.

### Brief Description of the Drawings

FIG. 1 is a simplified schematic illustration of the present invention as incorporated into a transport refrigeration system.
FIG. 2 is a more detailed schematic illustration thereof.
FIG. 3 is a graphic illustration of a compressor envelope.
FIG. 4 is a control logic flow diagram of the manner in which the compressor envelope is controlled in accordance with the present invention.
FIGS. 5A-5C show graphic illustrations of the critical parameters during pull-down conditions with the present invention incorporated in the system.

### Detailed Description of the Invention

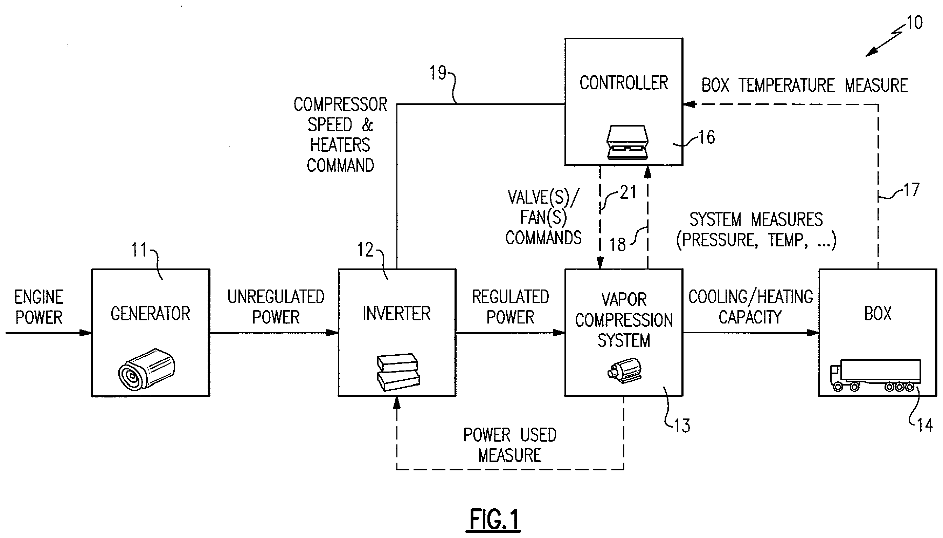

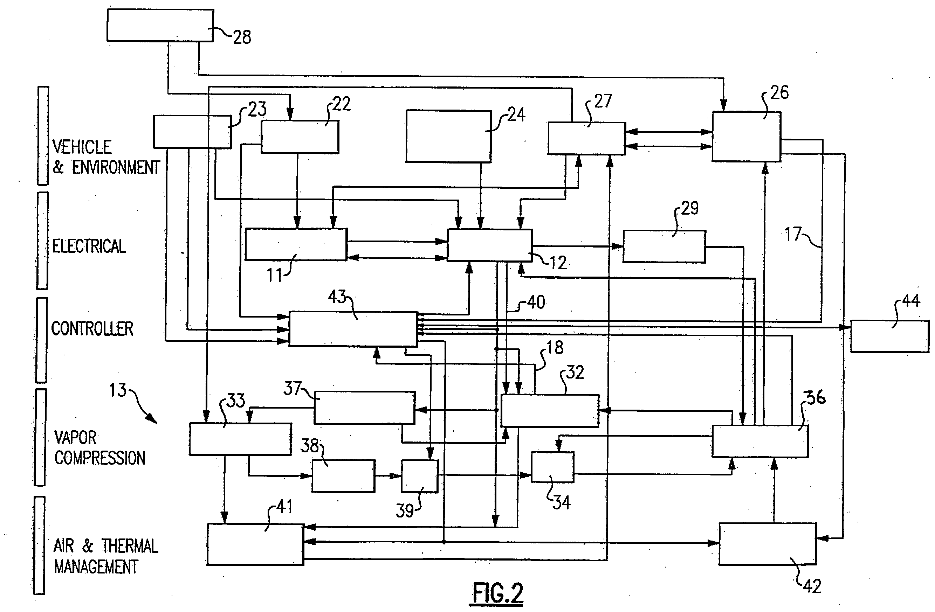

An embodiment of the invention is shown generally at 10 in Fig. 1 to include a generator 11, which is driven by the power of the vehicle engine, an inverter 12, which receives unregulated voltage from the generator 11, a vapor compression system 13, which receives regulated power regulated (i.e voltage and frequency) from the inverter 12, a box 14 which receives cooled air from the vapor compression system 13, and a controller 16, which receives box temperature measurements (i.e. return air temperatures, RAT) from the box 14 along line 17, and pressure and temperature measurements from the vapor compression system 13 along lines 18 in order to control the inverter 12 by way of line 19. The controller 16 also sends cooling demand signals to the vapor compression system 13 by way of line 21. A more detailed illustration of the system is shown in Fig. 2.

Considering first the vehicle itself and the environment surrounding that vehicle, there is included a drive engine 22, a battery 23, a stand-by power source 24 and a box with a door 26 that is opened from time to time. Both air and heat are transferred from and to the box to ambient 27, primarily when the door is open. This heat transfer, of course, will greatly affect the operation of the vapor compression system 13 and therefore the control thereof. The control of the door openings and the speed of the engine 22 is determined by the drive cycle 28, which is controlled by the operator.

As mentioned hereinabove, the engine 22 drives a generator 11 which provides unregulated voltage and current to the inverter 12 for powering the vapor compression system 13. The inverter 12 also provides power to a heater 29 that may be required under certain ambient conditions.

The vapor compression system 13 includes, in serial flow relationship, a compressor 32, a condenser 33, a thermal expansion valve 34 and an evaporator 36. An oil separator 37 may be provided downstream of the compressor 32, and a receiver 38 may be provided downstream of the condenser 33. Also, a control valve 39 may be provided between the receiver 38 and the TXV 34. The condenser 33 includes a condenser fan 41, and the evaporator 36 includes an evaporator fan 42, with each of these fans being independently driven at selectively variable speeds by a dc motor.

Control of the system is by way of a microcontroller 43 which receives the various inputs as indicated and then which, responsively, sends signals to the inverter 12 in order to modulate the power (i.e. voltage, frequency and/or current) being provided to the compressor 32 along line 40. In particular, the inputs to the microcontroller 43 include the discharge temperature t_{d} and pressure P_{d} and the suction pressure Pₛ of the compressor 32 as indicated schematically at line 18. Also passing through microcontroller 43 is the return air temperature, RAT along line 17. The various conditions of the system as maintained by the microcontroller 43 are shown in a display 44 for the convenience of the operator.

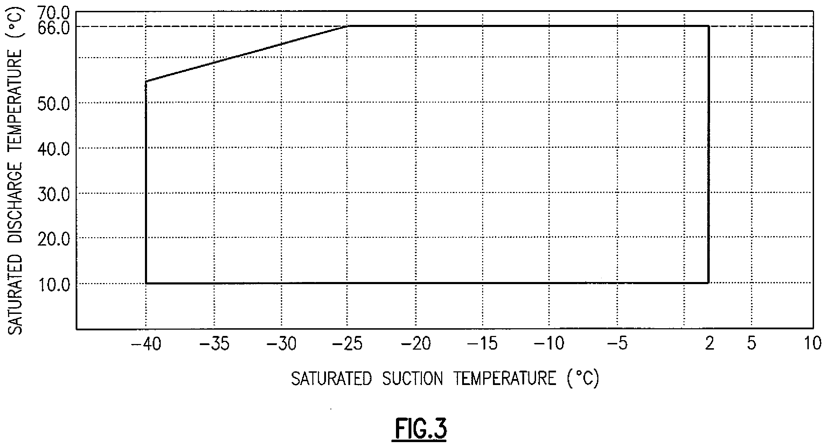

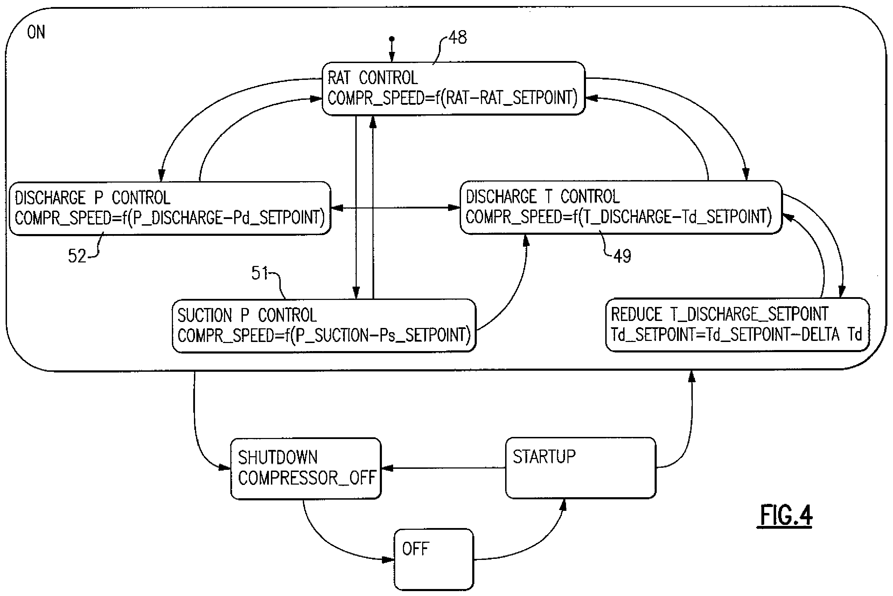

Shown in Fig. 3 is a graphic illustration of the saturated discharge temperature as a function of the saturated suction temperature. The saturated suction temperature is equivalent to the suction pressure, and the saturated discharge temperature is equivalent to the discharge pressure, with the two parameters being the critical parameters that define the envelope of a variable speed compressor. That is, in order to protect the compressor and the system operation, it is desirable to maintain the saturated suction temperature between -40°C and 2°C. Similarly, it is desirable to maintain the saturated discharge temperature between 10°C and 66°C. This is accomplished by varying the power being provided by the inverter 12 to the compressor 32 in response to four sensed variables, return air temperature (RAT), discharge pressure P_{d}, discharge temperature t_{d} and suction pressure Pₛ. This is accomplished as shown in Fig. 4.

As shown, there are four different control modules: 1) the RAT control 48, the T_{d} control 49, the Pₛ control 51 and the P_{d} control 52. Each of the controllers 48-52 controls its own designated variable, with only one of the four controllers is acting at one time, maintaining its variable of interest at a desired set point value. The microcontroller 43 monitors the four sensed conditions and switches control from one controller to the other as specified by the switching logic as indicated. The purpose, of course, is to maintain the desired compressor envelope during all operating conditions.

The condition under which a vapor compression system is under the greatest demand is a condition known as pull-down. This is the process of restoring the operating temperature of a refrigerated space after the introduction of an extraordinary heat load. This would occur, for example, when a new load of unrefrigerated cargo is placed in a truck such that the temperature in the box is caused to increase to a level well above the desired set point. Under these conditions it is desirable to reduce the temperature in the box to the set point temperature as quickly as is reasonably possible.

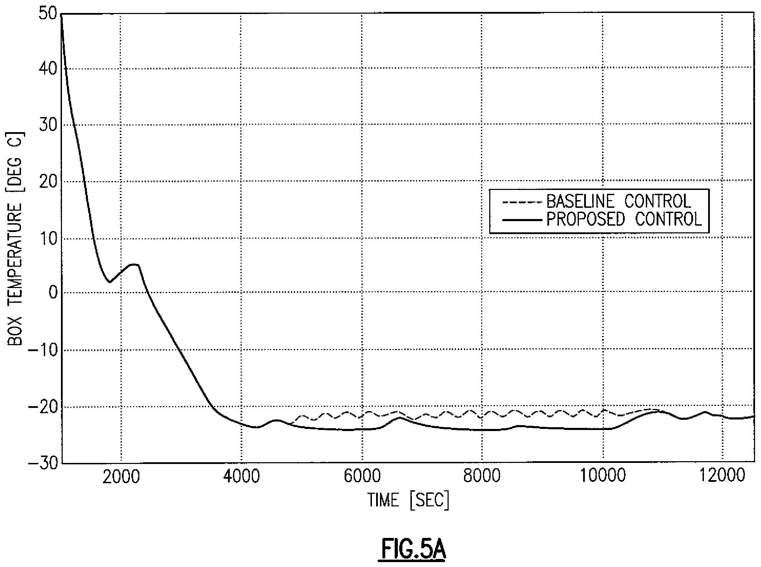

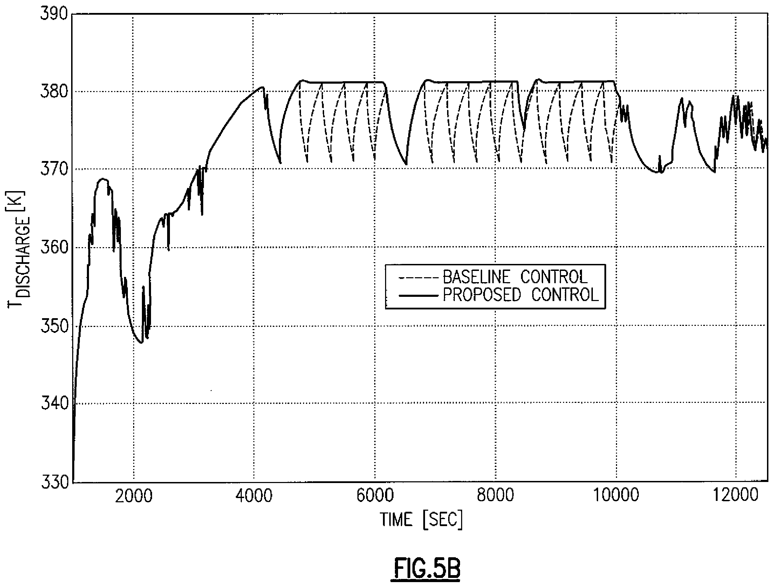

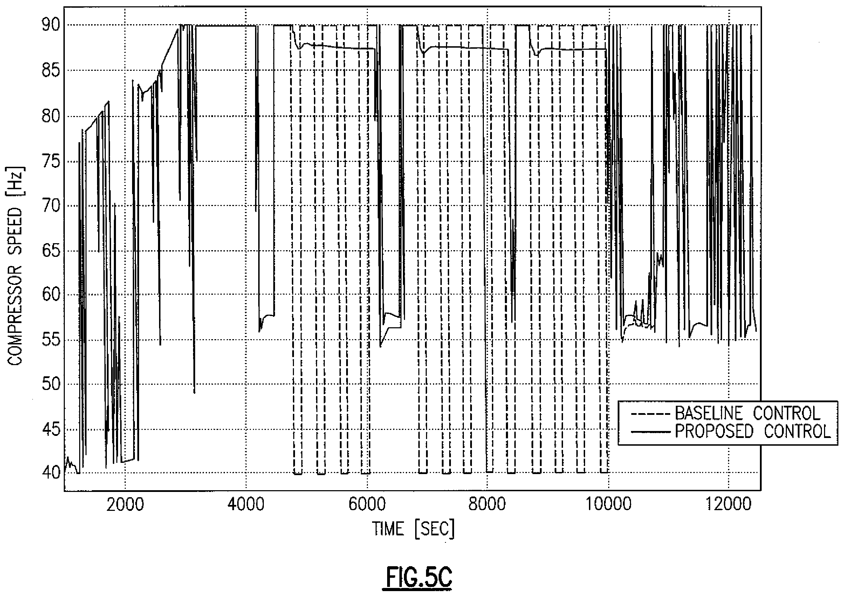

In Figs. 5A-5C, it will be seen that where continuous control of the compressor envelope is provided as described hereinabove, the variability of these various parameters is substantially lessened. In Fig. 5A, it will be seen that there is up to a 3.5 °C better control during about 1.5 hours periods of operation as compared with the non-controlled system. In Fig. 5B, it will be seen that the envelope routing control reduces cycling substantially in the later periods of operation, thereby having a direct impact on reliability. The same is true with respect to compressor speed as shown in Fig. 5C.

While the present invention has been particularly shown and described with reference to the preferred mode as illustrated in the drawing, it will be understood by one skilled in the art that various changes in detail may be effected therein without departing from the spirit and scope of the invention as defined by the claims.

## Claims

1. A transport refrigeration system (10) having a generator (11) driven by an engine (22) and a compressor (32) of a closed loop vapor compression system supplied with the generated electrical power, the transport refrigeration system (10) comprising a box (14) to be refrigerated by said vapor compression system, and a control apparatus (16), the control apparatus comprising:
a first temperature sensor configured to sense the discharge temperature (td) of the compressor (32) and generate a first temperature signal representative thereof;
a second temperature sensor configured to sense the temperature of air being returned (RAT) from said box (14) and to generate a return air temperature signal representative thereof;
a first pressure sensor configured to sense the suction pressure (Ps) of the compressor (32) and to generate a suction pressure signal representative thereof;
a second pressure sensor configured to sense the discharge pressure (Pd) of the compressor (32) and to generate a discharge pressure signal representative thereof;
a microprocessor (43) configured to receive said first temperature signal, said return air temperature signal, said suction pressure signal and said discharge pressure signal and to generate an inverter control signal in response thereto; and
an inverter (12) configured to receive said inverter control signal from said microprocessor (43) and to receive electrical power from the generator and to provide a level of electrical power to the compressor (32) in response to said inverter control signal.

2. A method of controlling a transport refrigeration system (10) having a generator (11) driven by an engine (22) with the generated electrical power being supplied to a compressor (32) of a closed loop compression system and a box (14) being refrigerated by said vapor compression system, comprising the steps of:
sensing the discharge temperature (td) of the compressor (32) and generating a first temperature signal representative thereof;
sensing the temperature of air being returned (RAT) from said box (14) and generating a return air temperature signal responsive thereto;
sensing the suction pressure (Ps) of the compressor (32) and creating a suction pressure signal representative thereof;
sensing the discharge pressure (Pd) of the compressor and generating a discharge pressure signal representative thereof;
sending said first temperature signal, said return air temperature signal, said suction pressure signal, and said discharge pressure signal to a microprocessor and generating an inverter control signal in response thereto; and
sending said inverter control signal to an inverter for responsively providing the desired electrical voltage and frequency to the compressor (32).

3. A transport refrigeration system (10) as set forth in claim 1 or a method as set forth in claim 2 wherein the electric power from said generator (11) to said inverter (12) is unregulated ac current and said electric power from said inverter to said compressor (32) is regulated ac current.

4. A transport refrigeration (10) or a method as set forth in claim 3 wherein said power is regulated by selectively varying the voltage, frequency and/or current.

5. A transport refrigeration system (10) as set forth in claim 1 or a method as set forth in claim 2 wherein the level of electrical power voltage and frequency to the compressor (32) is controlled in order to maintain the saturated suction temperature of the compressor within a predetermined range, optionally within a range of -40°C to 2°C.

6. A transport refrigeration system (10) as set forth in claim 1 or a method as set forth in claim 2 wherein the level of electrical power to the compressor is controlled so as maintain a saturated discharge temperature within a predetermined range, optionally within a range of 10°C and 66°C.

7. A transport refrigeration system (10) as set forth in claim 1 or a method as set forth in claim 2 wherein said microprocessor (43) includes at least three different control modules, with each module being controlled in response to sensed values of, and operating to control limited parameters of, discharge pressure, discharge temperature and/or suction pressure.

8. A transport refrigeration system (10) or a method as set forth in claim 7 and including a fourth control module which is responsive to sensed values of, and operates to control, a return air temperature.

9. A transport refrigeration system (10) or a method as set forth in claim 7 wherein only one control module operates at a time.

10. A transport refrigeration system (10) or a method as set forth in claim 7 wherein the control module which controls the discharge temperature has priority over the other control modules.

## Patentansprüche

1. Transportkälteanlage (10), die einen Generator (11), der von einem Motor (22) angetrieben wird, und einen Kompressor (32) einer Dampfkompressionsanlage mit geschlossenem Kreislauf aufweist, dem die generierte elektrische Energie zugeführt wird, wobei die Transportkälteanlage (10) einen Behälter (14), der von der Dampfkompressionsanlage gekühlt werden soll, und ein Steuergerät (16) umfasst, wobei das Steuergerät Folgendes umfasst:
einen ersten Temperatursensor, der konfiguriert ist, um die Austrittstemperatur (td) des Kompressors (32) zu erfassen und ein erstes Temperatursignal zu generieren, das dafür repräsentativ ist;
einen zweiten Temperatursensor, der konfiguriert ist, um die Temperatur von Luft zu erfassen, die von dem Behälter (14) zurückgeschickt wird und um ein Ablufttemperatur(RAT)-Signal zu generieren, das dafür repräsentativ ist;
einen ersten Drucksensor, der konfiguriert ist, um den Saugdruck (Ps) des Kompressors (32) zu erfassen und um ein Saugdrucksignal zu generieren, das dafür repräsentativ ist;
einen zweiten Drucksensor, der konfiguriert ist, um den Abgabedruck (Pd) des Kompressors (32) zu erfassen und um ein Abgabedrucksignal zu generieren, das dafür repräsentativ ist;
einen Mikroprozessor (43), der konfiguriert ist, um das erste Temperatursignal, das Ablufttemperatursignal, das Saugdrucksignal und das Abgabedrucksignal zu empfangen und um als Reaktion darauf ein Wechselrichtersteuersignal zu generieren; und
einen Wechselrichter (12), der konfiguriert ist, um das Wechselrichtersteuersignal von dem Mikroprozessor (43) zu empfangen und um elektrische Energie von dem Generator zu empfangen und um ein Niveau elektrischer Energie für den Kompressor (32) als Reaktion auf das Wechselrichtersteuersignal bereitzustellen.

2. Verfahren zum Steuern einer Transportkälteanlage (10), die einen Generator (11), der von einem Motor (22) mit der generierten elektrischen Energie angetrieben wird, die einem Kompressor (32) einer Kompressionsanlage mit geschlossenem Kreislauf zugeführt wird und einen Behälter (14) aufweist, der von der Dampfkompressionsanlage gekühlt wird, umfassend die folgenden Schritte:
Erfassen der Austrittstemperatur (td) des Kompressors (32) und Generieren eines ersten Temperatursignals, das dafür repräsentativ ist;
Erfassen der Temperatur von Luft, die von dem Behälter (14) zurückgeschickt wird und Generieren eines Ablufttemperatur(RAT)-Signals als Reaktion darauf;
Erfassen des Saugdrucks (Ps) des Kompressors (32) und Erzeugen eines Saugdrucksignals, das dafür repräsentativ ist;
Erfassen des Abgabedrucks (Pd) des Kompressors und Generieren eines Abgabedrucksignals, das dafür repräsentativ ist;
Senden des ersten Temperatursignals, des Ablufttemperatursignals, des Saugdrucksignals und des Abgabedrucksignals zu einem Mikroprozessor und Generieren eines Wechselrichtersteuersignals als Reaktion darauf; und
Senden des Wechselrichtersteuersignals zu einem Wechselrichter, um als Reaktion die gewünschte elektrische Spannung und Frequenz für den Kompressor (32) bereitzustellen.

3. Transportkälteanlage (10) nach Anspruch 1 oder Verfahren nach Anspruch 2, wobei die elektrische Energie von dem Generator (11) zu dem Wechselrichter (12) einem ungeregelten AC-Strom entspricht und die elektrische Energie von dem Wechselrichter zu dem Kompressor (32) einem geregelten AC-Strom entspricht.

4. Transportkälteanlage (10) oder Verfahren nach Anspruch 3, wobei die Energie durch ein selektives Variieren der Spannung, der Frequenz und/oder des Stroms geregelt wird.

5. Transportkälteanlage (10) nach Anspruch 1 oder Verfahren nach Anspruch 2, wobei das Niveau der Spannung und Frequenz von elektrischer Energie zu dem Kompressor (32) gesteuert wird, um die gesättigte Saugtemperatur des Kompressors innerhalb eines vorbestimmten Bereichs, gegebenenfalls innerhalb eines Bereichs von -40 °C bis 2 °C, zu halten.

6. Transportkälteanlage (10) nach Anspruch 1 oder Verfahren nach Anspruch 2, wobei das Niveau elektrischer Energie zu dem Kompressor gesteuert wird, um eine gesättigte Austrittstemperatur innerhalb eines vorbestimmten Bereichs, gegebenenfalls innerhalb eines Bereichs von 10 °C bis 66 °C, zu halten.

7. Transportkälteanlage (10) nach Anspruch 1 oder Verfahren nach Anspruch 2, wobei der Mikroprozessor (43) mindestens drei unterschiedliche Steuermodule einschließt, wobei jedes Modul als Reaktion auf erfasste Werte des Abgabedrucks, der Austrittstemperatur und/oder des Saugdrucks gesteuert wird und betrieben wird, um diesbezüglich begrenzte Parameter zu steuern.

8. Transportkälteanlage (10) oder Verfahren nach Anspruch 7 und einschließend ein viertes Steuermodul, das auf erfasste Werte einer Ablufttemperatur reagiert und betrieben wird, um diese zu steuern.

9. Transportkälteanlage (10) oder Verfahren nach Anspruch 7, wobei lediglich ein Steuermodul auf einmal betrieben wird

10. Transportkälteanlage (10) oder Verfahren nach Anspruch 7, wobei das Steuermodul, welches die Austrittstemperatur steuert, gegenüber den anderen Steuermodulen Priorität hat.

## Revendications

1. Système de réfrigération pour le transport (10) comportant un générateur (11) entraîné par un moteur (22) et un compresseur (32) d'un système de compression de vapeur en boucle fermée alimenté par l'énergie électrique générée, le système de réfrigération pour le transport (10) comprenant un compartiment (14) devant être réfrigéré par ledit système de compression de vapeur, et un appareil de commande (16), l'appareil de commande comprenant :
un premier détecteur de température configuré pour détecter la température de décharge (td) du compresseur (32) et générer un premier signal de température représentatif de celle-ci ;
un second détecteur de température configuré pour détecter la température de l'air étant renvoyé (RAT) à partir dudit compartiment (14) et pour générer un signal de température d'air renvoyé représentatif de celle-ci ;
un premier détecteur de pression configuré pour détecter la pression d'aspiration (Ps) du compresseur (32) et pour générer un signal de pression d'aspiration représentatif de celle-ci ;
un second détecteur de pression configuré pour détecter la pression de décharge (Pd) du compresseur (32) et pour générer un signal de pression de décharge représentatif de celle-ci ;
un microprocesseur (43) configuré pour recevoir ledit premier signal de température, ledit signal de température d'air renvoyé, ledit signal de pression d'aspiration et ledit signal de pression de décharge et pour générer un signal de commande d'inverseur en réponse à ceux-ci ; et
un inverseur (12) configuré pour recevoir ledit signal de commande d'inverseur à partir dudit microprocesseur (43) et pour recevoir de l'énergie électrique à partir du générateur et pour fournir un niveau d'énergie électrique au compresseur (32) en réponse audit signal de commande d'inverseur.

2. Procédé de commande d'un système de réfrigération pour le transport (10) comportant un générateur (11) entraîné par un moteur (22) avec l'énergie électrique générée alimentant un compresseur (32) d'un système de compression en boucle fermée et un compartiment (14) étant réfrigéré par ledit système de compression de vapeur, comprenant les étapes de :
détection de la température de décharge (td) du compresseur (32) et génération d'un premier signal de température représentatif de celle-ci ;
détection de la température de l'air étant renvoyé (RTA) à partir dudit compartiment (14) et génération d'un signal de température d'air renvoyé en réponse à celle-ci ;
détection de la pression d'aspiration (Ps) du compresseur (32) et création d'un signal de pression d'aspiration représentatif de celle-ci ;
détection de la pression de décharge (Pd) du compresseur et génération d'un signal de pression de décharge représentatif de celle-ci ;
envoi dudit premier signal de température, dudit signal de température d'air renvoyé, dudit signal de pression d'aspiration et dudit signal de pression de décharge à un microprocesseur et génération d'un signal de commande d'inverseur en réponse à ceux-ci ; et
envoi dudit signal de commande d'inverseur à un inverseur pour fournir en réponse la tension électrique et la fréquence souhaitées au compresseur (32).

3. Système de réfrigération pour le transport (10) selon la revendication 1 ou procédé selon la revendication 2 dans lequel l'énergie électrique dudit générateur (11) audit inverseur (12) est un courant CA non régulé et ladite énergie électrique dudit inverseur audit compresseur (32) est un courant CA régulé.

4. Réfrigération pour le transport (10) ou procédé selon la revendication 3 dans lequel ladite énergie est régulée en modifiant sélectivement la tension, la fréquence et/ou le courant.

5. Système de réfrigération pour le transport (10) selon la revendication 1 ou procédé selon la revendication 2 dans lequel le niveau de tension d'énergie électrique et de fréquence sur le compresseur (32) est commandé afin de maintenir la température d'aspiration saturée du compresseur à l'intérieur d'une plage prédéterminée, facultativement à l'intérieur d'une plage de -40 °C à 2 °C.

6. Système de réfrigération pour le transport (10) selon la revendication 1 ou procédé selon la revendication 2 dans lequel le niveau d'énergie électrique sur le compresseur est commandé de façon à maintenir une température de décharge saturée à l'intérieur d'une plage prédéterminée, facultativement à l'intérieur d'une plage de 10 °C et 66 °C.

7. Système de réfrigération pour le transport (10) selon la revendication 1 ou procédé selon la revendication 2 dans lequel ledit microprocesseur (43) inclut au moins trois différents modules de commande, avec chaque module étant commandé en réponse aux valeurs détectées de, et opérant pour commander des paramètres limités de, pression de décharge, température de décharge et/ou pression d'aspiration.

8. Système de réfrigération pour le transport (10) ou procédé selon la revendication 7 et incluant un quatrième module de commande qui répond à des valeurs détectées de, et opère pour commander, une température d'air renvoyé.

9. Système de réfrigération pour le transport (10) ou procédé selon la revendication 7 dans lequel seul un module de commande opère à la fois.

10. Système de réfrigération pour le transport (10) ou procédé selon la revendication 7 dans lequel le module de commande qui commande la température de décharge a la priorité sur les autres modules de commande.
